# EUROPEAN PATENT APPLICATION

(11) **EP 3 778 323 A1**
(43) Date of publication of application: **17.02.2021**
(21) Application number: 19785331.0
(22) Date of filing: 10.04.2019
(51) Int. Cl.: B60S 5/06

(54) **POSITIONING DEVICE AND BATTERY REPLACEMENT APPARATUS**

(30) Priority: 10.04.2018 CN 201810316723; 10.04.2018 CN 201810316722
(71) Applicant: NIO (ANHUI) HOLDING CO., LTD, Economic and Technological Development Zone Hefei Anhui 230601 (CN)
(72) Inventor: BENGTSSON, Jan, Shanghai (CN); LI, Nan, Shanghai (CN); TIAN, Xiaotao, Shanghai (CN); DING, Xikun, Shanghai (CN); LIU, Jun, Shanghai (CN); MA, Yongyue, Shanghai (CN)
(74) Representative: Dall'Olio, Christian
(86) International application number: PCT/CN2019/082064
(87) International publication number: WO 2019/196867

(57) **Abstract**

A positioning device and a battery swap apparatus are disclosed. The positioning device comprises a positioning part (1) and a power part (2) connected thereto. The power part (2) drives the positioning part (1) to move upwards or downwards. The battery swap apparatus comprises not less than two such positioning devices. The positioning device has a simple structure and is easy to mount and replace.

## Description

### Technical Field

The invention relates to the technical field of battery swapping for electric vehicles, and in particular to a positioning device and a battery swap apparatus.

### Background Art

With the development of electric vehicles, how to quickly and conveniently replenish traction batteries of the electric vehicles with electric energy has become an important factor in the use and promotion of the electric vehicles. Swapping the traction batteries by using a battery swap station has become a convenient and effective way to replenish the electric vehicles with electric energy. In the battery swapping process, a battery swap apparatus needs to be accurately positioned relative to a vehicle body by means of a positioning device, such that a fresh battery pack is aligned with a mounting position. In addition, the positioning device can be expanded and contracted relative to the battery swap apparatus. In the positioning process, the positioning device is higher than the battery swap apparatus and positioned relative to the vehicle body. In the battery pack exchange process, that is, when a battery pack is moved into or out of the battery swap apparatus, the positioning device needs to be lower than the battery swap apparatus, so as to ensure the smooth exchange of the battery pack.

However, the existing positioning device has at least the following disadvantages:
(1) the positioning efficiency and accuracy are low;
(2) the space needs to be structurally occupied in three directions of X, Y and Z at the same time, so that the occupied space is large; and
(3) when the positioning device fails, the swapping and maintenance are difficult, and the cost is high.

### Summary of the Invention

The technical problem to be solved by the invention is to provide a positioning device and a battery swap apparatus, which have a simple structure and a small space, and are easy to mount and replace.

In order to solve the above technical problem, the invention provides a positioning device, which comprises a positioning part and a power part connected thereto, wherein the power part drives the positioning part to move upwards or downwards.

Further, the positioning part comprises a first gear, a second gear, and a positioning pin, wherein
the first gear is connected to the power part, and the power part drives the first gear to rotate;
the second gear meshes perpendicularly with the first gear, and the first gear drives the second gear to rotate; and
the second gear is provided with an axial through hole, the positioning pin is provided in the axial through hole, and the positioning pin is driven to move up and down when the second gear rotates.

Further, an outer surface of the positioning pin is provided with an external thread, and a wall of the axial through hole is provided with an internal thread cooperating with the external thread.

Further, one end of the positioning pin is of a cone structure, which is able to extend into a positioning hole of a vehicle body for positioning, and the other end of the positioning pin is provided with a baffle, wherein the baffle and the axial through hole interfere with each other when coming into contact with each other.

Further, the outer surface of the positioning pin comprises a plurality of alternately arranged threaded portions and planar portions, both the threaded portion and the planar portion extend in a direction parallel to an axis of the positioning pin, and the distance between the planar portion and the axis of the positioning pin is less than the distance between the threaded portion and the axis.

Further, the positioning pin is provided with a first limiting hole and a second limiting hole, and axes of the first limiting hole and the second limiting hole are parallel, and are both perpendicular to the axis of the positioning pin, wherein
the first limiting hole is configured to limit the lowest position of the positioning pin during descending; and
the second limiting hole is configured to limit the highest position of the positioning pin during ascending.

Further, the positioning part further comprises a position sensor and a limiting portion, wherein
the position sensor is configured to collect position information of the positioning pin; and
the limiting portion is configured to restrict, when the first limiting hole and the position sensor are at the same height, the positioning pin from further descending, such that the positioning pin descends to the lowest position, or to:
restrict, when the second limiting hole and the position sensor are at the same height, the positioning pin from further ascending, such that the positioning pin ascends to the highest position.

Further, the positioning part further comprises a gear box, the gear box comprises a box body and a fixed plate, and the fixed plate is mounted on the box body to close the box body; and
the first gear and the second gear are mounted in the gear box, the fixed plate is provided with a first guide hole corresponding to the axial through hole, the first guide hole has a cross-sectional shape matching that of the positioning pin, and the positioning pin is movable up and down through the first guide hole.

Further, one or more stacked bearings are further provided in the gear box, and the second gear is mounted on the bearing.

Further, the power part comprises a first electric motor and a speed reducer connected sequentially; and
the speed reducer is connected to the first gear to drive the first gear to rotate.

Further, the diameter of the first gear is less than that of the second gear.

Further, further comprising a mounting frame, wherein the positioning part is mounted on the power part, the positioning part and the power part are both mounted in the mounting frame, and the power part is capable of driving the positioning part to ascend or descend relative to the mounting frame; and wherein the power part is an electric push rod part.

Further, the electric push rod part comprises a second electric motor, a push rod body, and a telescopic rod provided in the push rod body;
the second electric motor is connected to the telescopic rod, and controls the telescopic rod to ascend or descend relative to the push rod body; and
the telescopic rod is fixedly connected to the positioning part, and drives the positioning part to move up and down between a first position and a second position relative to the mounting frame.

Further, a first limiting portion and a second limiting portion are provided on the telescopic rod, and a limiting mechanism is provided on the push rod body;
when the telescopic rod ascends to the highest position, the first limiting portion and the limiting mechanism interfere with each other, and the positioning part correspondingly ascends to the first position; and
when the telescopic rod descends to the lowest position, the second limiting portion and the limiting mechanism interfere with each other, and the positioning part correspondingly descends to the second position.

Further, one or more first insertion holes are provided in the telescopic rod, a first bolt corresponding to each of the first insertion holes is provided at the connection between the positioning part and the telescopic rod, and the first bolt is mounted in the corresponding first insertion hole, and fixedly connects the telescopic rod to the positioning part.

Further, the mounting frame comprises a first mounting portion and a second mounting portion, the second mounting portion is fixed on a battery swap apparatus, the first mounting portion is fixed on the second mounting portion, the positioning part is mounted in the first mounting portion, and the electric push rod part is mounted in the second mounting portion.

Further, the first mounting portion comprises a first bottom plate, a second bottom plate, a first side plate, and a guide sleeve, wherein
the first bottom plate and the second bottom plate are arranged face to face, and a first gap is provided between the first bottom plate and the second bottom plate;
the first side plate is perpendicularly arranged in the first gap, is perpendicular to the first bottom plate and the second bottom plate, and has two ends respectively connected to the first bottom plate and the second bottom plate; and
the first bottom plate is provided with a first through hole, the second bottom plate is provided with a second through hole corresponding to the first through hole, and one end of the guide sleeve is snap-fitted in the first through hole, and the other end thereof extends into the second through hole and is fixedly connected to the first bottom plate and the second bottom plate.

Further, the guide sleeve comprises a guide body, a flange structure, and a second guide hole, wherein
the flange structure is provided at one end of the guide body, the guide body passes through the first through hole, and the flange structure is snap-fitted to the first bottom plate;
an axial direction of the second guide hole penetrates the guide body and the flange structure; and
the positioning part is located in the second guide hole, the positioning part is connected to an inner wall of the second guide hole in a sliding fit manner, and the positioning part is movable up and down along the axial direction of the second guide hole.

Further, the second mounting portion comprises a second side plate, a third side plate, and a third bottom plate, wherein
the second side plate and the third side plate are arranged face to face, and a second gap is provided between the second side plate and the third side plate; and
the third bottom plate is perpendicularly arranged in the second gap, is perpendicular to the second side plate and the third side plate, and has two ends respectively connected to the second side plate and the third side plate.

Further, the bottom of the electric push rod part is provided with a mounting structure, the mounting structure is provided on the third bottom plate, the mounting structure is provided with a second insertion hole, the third side plate is provided with a third insertion hole corresponding to the second insertion hole, and the second insertion hole and the third insertion hole are connected via a cotter pin, such that the electric push rod part and the second mounting portion are fixedly connected.

Further, the third bottom plate and the second bottom plate are arranged face to face, a third gap is provided between the third bottom plate and the second bottom plate, the second side plate and the third side plate are provided in the third gap, and the second bottom plate is perpendicular to the second side plate and the third side plate, and is fixedly connected to the second side plate and the third side plate.

Further, the positioning part comprises the positioning pin, one end of the positioning pin is connected to the electric push rod part, and the other end thereof is of a cone structure, which is capable of extending into a positioning hole of a vehicle body for positioning.

The invention further provides a battery swap apparatus, comprising not less than two such positioning devices.

The invention has obvious advantages and beneficial effects as compared with the prior art. By means of the technical solutions, the method and device for estimating the remaining range of a transportation means with a power supply system according to the invention can achieve considerable technical progress and practicability, have wide industrial utilization value, and at least have the following advantages.
(1) The positioning device according to the invention has a simple structural composition and low costs, and is easy to mount and replace.
(2) In the positioning process, the positioning device has a large positioning thrust, a high force transferring efficiency, and a high positioning efficiency.
(3) The positioning device may change the output direction of the power part through the cooperation of two gears, so that the positioning device occupies a lower height.
(4) The positioning device may limit the highest position during ascending and the lowest position during descending of the positioning pin by providing a position sensor, a first limiting hole, and a second limiting hole, so as to prevent the damage to a component caused by the positioning pin ascending too high or descending too low.
(5) The surface of the positioning pin of the positioning device uses a combination of threaded portions and planar portions, and the positioning pin cooperates with the first guide hole, which can not only limit the ascending/descending direction of the positioning pin, but can also prevent the rotation of the positioning pin, thereby improving the positioning efficiency and accuracy
(6) The positioning device may be composed of an electric push rod and the positioning pin mounted in parallel, and a positioning part and a telescopic rod of the electric push rod part are connected via bolts, which can not only have a fixed connection function, but can also prevent the positioning part from rotating relative to the mounting frame.
(7) The positioning device may use a cotter pin to fix the electric push rod part to the mounting frame, which facilitates the mounting and removal.
(8) In the battery swap apparatus, each positioning device may be independently disposed and separately controlled, which is convenient for mounting and maintenance.
(9) The positioning device may occupy only the space in two directions perpendicular to each other, and occupies only the space in one of the directions in the positioning process, so that the overall occupation space is small, and the space occupied by the battery swap apparatus is reduced, thereby increasing the diversity of the layout of a battery swap station.

The description above is only summary of the technical solutions of the invention. In order to understand the technical means of the invention more clearly for implementation according to the contents of the specification, and in order to make the above and other objectives, features and advantages of the invention more apparent and easy to be understood, preferred embodiments are especially taken as examples in conjunction with the accompanying drawings, and the detailed description is as follows.

### Brief Description of the Drawings

Fig. 1 is a schematic diagram of a positioning device provided according to Embodiment 1 of the invention;
Fig. 2 is an exploded view of the positioning device shown in Fig. 1;
Fig. 3 is a partial cross-sectional view through an X-direction in Fig. 1;
Fig. 4 is a schematic diagram of a positioning pin of the positioning device provided according to Embodiment 1 of the invention, which protrudes from a gear box;
Fig. 5 is a schematic diagram of a positioning device provided according to Embodiment 2 of the invention;
Fig. 6 is a cross-sectional view through an A-A direction in Fig. 5;
Fig. 7 is an exploded view of the positioning device shown in Fig. 5; and
Fig. 8 is a schematic diagram of a battery swap station provided according to an embodiment of the invention.

### [Description of Symbols]

| | |
|---|---|
| 1: Positioning part | 2: Power part |
| 11: First gear | 12: Second gear |
| 13: Positioning pin | 121: Axial through hole |
| 14: Baffle | 15: Gear box |
| 151: Box body | 152: Fixed plate |
| 153: First guide hole | 131: Threaded portion |
| 132: Planar portion | 133: First limiting hole |
| 134: Second limiting hole | 154: Position sensor |
| 21: First electric motor | 22: Speed reducer |
| 155: Bearing | 20: Electric push rod part |
| 3: Mounting frame | 23: Telescopic rod |
| 24: Second electric motor | 25 Push rod body |
| 211: First insertion hole | 110: First bolt |
| 31: First mounting portion | 32: Second mounting portion |
| 311: First bottom plate | 312: Second bottom plate |
| 313: First side plate | 314: Guide sleeve |
| 315: First gap | 316: First through hole |
| 317: Second through hole | 41: Guide body |
| 42: Flange structure | 43: Second guide hole |
| 321: Second side plate | 322: Third side plate |
| 323: Third bottom plate | 324: Second gap |
| 231: Mounting structure | 232: Second insertion hole |
| 33: Third insertion hole | 34: Cotter pin |
| 325: Third gap | 35: Mounting hole |

### Detailed Description of Embodiments

In order to further illustrate the technical means used to achieve the intended purpose of the invention and the technical effects thereof, specific implementations of a positioning device and a battery swap apparatus proposed in the invention and the effects thereof are described in detail hereinafter in conjunction with the accompanying drawings and the preferred embodiments.

An embodiment of the invention provides a positioning device, which comprises a positioning part 1 and a power part 2 connected thereto, wherein the power part 2 drives the positioning part 1 to move upwards or downwards. The positioning device described in the embodiment of the invention has a simple structure and is easy to mount and replace.

The compositional structure of the positioning device will be described in detail below through two specific embodiments:

### Embodiment 1

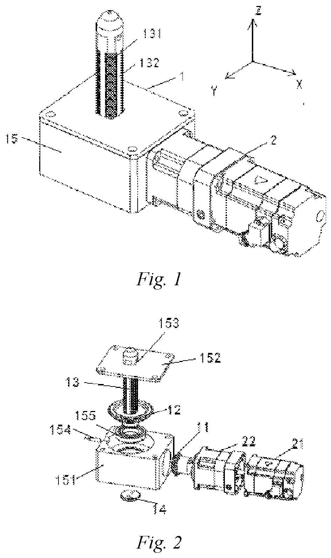

As shown in Figs. 1 to 3, a positioning device according to Embodiment 1 comprises a positioning part 1 and a power part 2. The positioning part 1 is connected to the power part 2, and the power part 2 is configured to supply power to the positioning part 1. Specifically, the positioning part 1 comprises a first gear 11, a second gear 12, and a positioning pin 13; the first gear 11 is connected to the power part 2, and the power part 2 drives the first gear 11 to rotate about an X axis; and the second gear 12 meshes perpendicularly with the first gear 11, and the first gear 11 drives the second gear 12 to rotate about a Z axis, the X direction being perpendicular to the Z direction. As an example, the diameter of the first gear 11 is less than that of the second gear 12. The second gear 12 is provided with an axial through hole 121, the positioning pin 13 is provided in the axial through hole 121, and the positioning pin 13 is driven to move up and down in the Z direction when the second gear 12 rotates. The positioning device changes the output direction of the power part 2 through the cooperation of the two gears: the first gear 11 and the second gear 12, minimizing the height occupied by the positioning device in the Z-axis direction, and the positioning device occupies only the space in the X and Z directions, and occupies only the space in a Z-axis direction and does not occupy the space in X-axis and Y-axis directions in the positioning process, so that the entire device occupies a small space, and the space occupied by the battery swap apparatus is reduced, thereby increasing the diversity of the layout of a battery swap station.

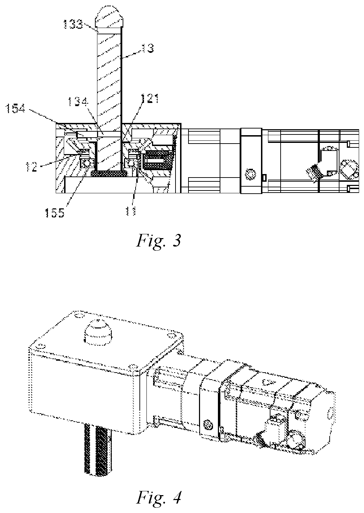

As shown in Figs. 2 and 3, as an example, an outer surface of the positioning pin 13 is provided with an external thread, and a wall of the axial through hole of the second gear 12 is provided with an internal thread cooperating with the external thread. The structure of the mutual cooperation of the external thread and the internal thread enables the positioning pin 13 to ascend or descend under the rotation of the second gear 12 and can realize a self-locking function, that is, the positioning pin 13 can ascend or descend only under the rotation of the second gear 12 instead of under pressure from the outside, thereby improving the positioning accuracy of the positioning device.

As an example, one end of the positioning pin 13 may be of a cone structure, which can extend into a positioning hole of a vehicle body for positioning. However, it can be understood that one end of the positioning pin 13 being of a cone structure is only an embodiment, but it is not limited thereto. At the position where the positioning pin 13 is connected to the positioning hole of the vehicle body, the specific structure of the end of the positioning pin 13 for positioning may be specifically set according to factors such as the shape of the positioning hole of the vehicle body. The other end of the positioning pin 13 is provided with a baffle 14. The baffle 14 is fixedly connected to the positioning pin 13, which is specifically implemented through welding, riveting, bolting, etc. As the positioning pin 13 ascends relative to the second gear 12, the baffle 14 and the axial through hole 121 interfere with each other when coming into contact with each other, so as to prevent the positioning pin 13 from passing upwards out of the second gear 12 and damaging the positioning device.

The outer surface of the positioning pin 13 comprises a plurality of alternately arranged threaded portions 131 and planar portions 132, both the threaded portions 131 and the planar portions 132 extend in a direction parallel to an axis of the positioning pin 13, the distance between the planar portion 132 and the axis of the positioning pin 13 is less than the distance between the threaded portion 131 and the axis, and the cross section of the positioning pin 13 is polygonal. As an example, the outer surface of the positioning pin 13 is first configured to have a threaded structure, and then the surface of the positioning pin 13 is evenly ground to form four planar portions 132, such as in the example shown in Fig. 2. In this case, the cross section of the positioning pin 13 is squarish.

As shown in Fig. 3, the positioning pin 13 is provided with a first limiting hole 133 and a second limiting hole 134, and axes of the first limiting hole 133 and the second limiting hole 134 are parallel, and are both perpendicular to the axis of the positioning pin 13, wherein the first limiting hole 133 is configured to limit the lowest position of the positioning pin 13 during descending; and the second limiting hole 134 is configured to limit the highest position of the positioning pin 13 during ascending. When the length of the positioning pin 13 is greater than that of a gear box 15 in an axial direction of the positioning pin 13, the bottom end of the positioning pin 13 may protrude from the gear box 15 during the descending process of the positioning pin 13, such as in the example shown in Fig. 4. However, it can be understood that a through hole corresponding to the bottom end of the positioning pin 13 is provided on the battery swap apparatus where the positioning device is located, such that the positioning pin 13 enters the through hole when protruding from the gear box 15, and the depth of the through hole may further limit the lowest position of the positioning pin 13 during descending, thereby preventing the positioning pin 13 from excessively descending and damaging the positioning device.

The positioning part 1 further comprises a position sensor 154 and a limiting portion (not shown in the figure), wherein the position sensor 154 is configured to collect position information of the positioning pin 13; and the limiting portion is configured to restrict, when the first limiting hole 133 and the position sensor 154 are at the same height, the positioning pin 13 from further descending, such that the positioning pin 13 descends to the lowest position, or the limiting portion is configured to restrict, when the second limiting hole 134 and the position sensor 154 are at the same height, the positioning pin 13 from further ascending, such that the positioning pin 13 ascends to the highest position. However, it can be understood that when the limiting portion limits the movement of the positioning pin 13, a control mechanism controls the device to stop working, such that the first gear 11 and the second gear 12 stop rotating. As an example, the limiting portion may be a telescopic rod used in cooperation with the first limiting hole 133 and the second limiting hole 134. When the first limiting hole 133 and the position sensor 154 are at the same height, the telescopic rod extends into the first limiting hole 133, thereby limiting the ascending and descending of the positioning pin 13; and when the second limiting hole 134 and the position sensor 154 are at the same height, the telescopic rod extends into the second limiting hole 134, thereby limiting the ascending and descending of the positioning pin 13. However, it can be understood that other structures may also be used for the limiting portion, provided that the positioning pin 1 can be restricted from moving up and down. As another example, since the positioning pin 13 has a self-locking function, a limiting portion may not be provided, and the operation of the device may be directly stopped by the control mechanism to control the positioning pin 13 to no longer ascend or descend. However, it can be understood that the first limiting hole 133 and the second limiting hole 134 only limit the highest position and the lowest position of the positioning pin 13, but the specific ascending height of the positioning device in the positioning process can be specifically set according to parameters such as the height between the battery swap apparatus and the positioning hole of the vehicle body, and the depth of the positioning hole of the vehicle body, provided that the positioning pin 13 is between the highest position and the lowest position.

The positioning part 1 further comprises a gear box 15. The gear box 15 comprises a box body 151 and a fixed plate 152, wherein the fixed plate 152 is mounted on the box body 151 to close the box body 151; and the first gear 11 and the second gear are mounted in the gear box 15. The fixed plate 152 is provided with a first guide hole 153 corresponding to the axial through hole 121, and the positioning pin 13 can ascend or descend relative to the gear box 15 through the first guide hole 153. The first guide hole 153 has a cross-sectional shape matching that of the positioning pin 13, such that the first guide hole 153 can not only have a guiding function, but can also limit the rotation of the positioning pin 13, thereby ensuring the positioning pin 13 to ascend or descend smoothly, and improving the positioning accuracy. As an example, the cross section of the positioning pin 13 is squarish, and correspondingly, the first guide hole 153 is provided as a square hole to match the positioning pin 13.

One or more stacked bearings 155 are further provided in the gear box 15, and the second gear 12 is mounted on the bearing 155. The positioning pin 13 is subjected to force during the positioning process. In this case, the bearing 155 supports the second gear 12 to support the positioning pin 13. In addition, the bearing 155 can also limit the position of the second gear 12, such that the second gear 12 can only rotate about the Z axis, without any other serial movement. In the example shown in Figs. 2 and 3, the number of bearings 155 is one, but it can be understood that the number of bearings 155 may also be set to two or more. The larger the number, the more the stability of the positioning device can be increased. However, the larger the number, the larger the height of the bearings 155, and the larger the space occupied. Therefore, the number of bearings 155 may be set comprehensively based on factors such as the stability required by the positioning device and the space occupied thereby.

In the example as shown in Fig. 2, the power part 2 comprises a first electric motor 21 and a speed reducer 22 connected sequentially, wherein the first electric motor 21 supplies power to the speed reducer 22; and the speed reducer 22 is connected to the first gear 11 to drive the first gear 11 to rotate about the X axis.

The positioning device according to Embodiment 1 of the invention has a simple structural composition and low costs. In the positioning process, there is a large positioning thrust, a high force transferring efficiency, and a high positioning efficiency. The positioning device changes the output direction of the power part 2 through the cooperation of two gears, so that the positioning device occupies a lower height. The highest position during ascending and the lowest position during descending of the positioning pin 13 are limited by providing the position sensor 154, the first limiting hole 133, and the second limiting hole 134, so as to prevent the damage to a component caused by the positioning pin 13 ascending too high or descending too low. The surface of the positioning pin 13 uses a combination of the threaded portions 131 and the planar portions 132, and the positioning pin cooperates with the first guide hole 153, which can not only limit the ascending/descending direction of the positioning pin 13, but can also prevent the rotation of the positioning pin 13, thereby improving the positioning efficiency and accuracy. In the battery swap apparatus, each positioning device may be independently disposed and separately controlled, which is convenient for mounting and maintenance. In addition, the positioning device occupies only the space in the X and Z directions, and occupies only the space in the Z-axis direction and does not occupy the space in the X-axis and Y-axis directions in the positioning process, so that the overall occupation space is small, and the space occupied by the battery swap apparatus is reduced, thereby increasing the diversity of the layout of a battery swap station.

### Embodiment 2

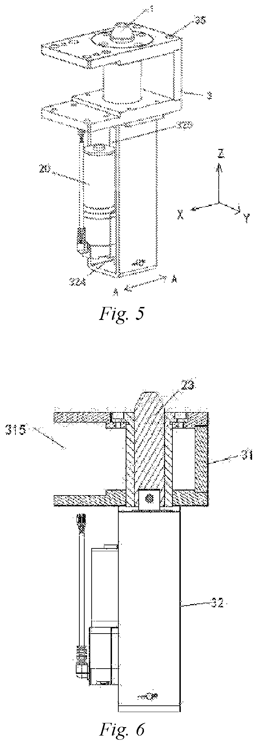

As shown in Figs. 5 to 7, a positioning device provided in Embodiment 2 comprises a positioning part 1, a power part 2, and a mounting frame 3, the power part 2 being an electric push rod part 20, wherein the positioning part 1 is mounted on the electric push rod part 20; the positioning part 1 and the electric push rod part 20 are mounted in the mounting frame 3; and the electric push rod part 20 may drive the positioning part 1 to ascend or descend relative to the mounting frame 3 in an Z-axis direction. As an example, the Z-axis direction is a vertical direction. The positioning device has a simple structure and is easy to mount and maintain. In addition, the positioning device occupies only the small space in X and Y directions, and occupies only the space in the Z-axis direction and does not occupy the space in X-axis and Y-axis directions in the positioning process because no action is performed in the X-axis and Y-axis directions, so that the overall occupation space is small, and thus the space occupied by the battery swap apparatus is reduced, thereby increasing the diversity of the layout of a battery swap station.

The electric push rod part 20 may directly use the existing electric push rod. The electric push rod can be directly replaced when the electric push rod part of the positioning device fails. This is simple and convenient, and there is no need for the detection of the fault position or the replacement of small parts, which facilitates the mounting, maintenance, and replacement of the entire positioning device. As shown in Fig. 5, the electric push rod may comprise a second electric motor 24, a push rod body 25, and a telescopic rod 23 provided in the push rod body 25. The second electric motor 24 is connected to the telescopic rod 23, and the second electric motor 24 controls the telescopic rod 23 to ascend or descend relative to the push rod body 25 in the Z-axis direction. The telescopic rod 23 is fixedly connected to the positioning part 1, and drives the positioning part 1 to move up and down between a first position and a second position relative to the mounting frame 3 in the Z-axis direction. As the power device of the positioning part 1, the electric push rod has a large positioning thrust, a high force transferring efficiency, and a high positioning efficiency. As an example, a first limiting portion and a second limiting portion may be provided on the telescopic rod 23, and a limiting mechanism may be provided on the push rod body 25. When the telescopic rod 23 moves to a position where the first limiting portion corresponds to the limiting mechanism, the first limiting portion and the limiting mechanism interfere with each other, the telescopic rod 23 ascends to the highest position, and the positioning part 1 correspondingly ascends to the first position. When the telescopic rod 23 moves to a position where the second limiting portion corresponds to the limiting mechanism, the second limiting portion and the limiting mechanism interfere with each other, the telescopic rod 23 descends to the lowest position, and the positioning part 1 correspondingly descends to the second position. The specific descending height of the positioning part 1 in the positioning process of the positioning device can be specifically set according to parameters such as the height between the battery swap apparatus and the positioning hole of the vehicle body, and the depth of the positioning hole of the vehicle body, provided that the positioning part is between the first position and the second position.

As shown in Fig. 6, the telescopic rod 23 and the positioning part 1 can be fixedly connected in a variety of connection ways, such as welding or riveting. As an example, the telescopic rod 23 and the positioning part 1 may be connected in the following way: one or more first insertion holes 211 are provided in the telescopic rod 23, a first bolt 110 corresponding to each of the first insertion holes 211 is provided at the connection between the positioning part 1 and the telescopic rod 23, and the first bolt 110 is mounted in the corresponding first insertion hole 211, and fixedly connects the telescopic rod 23 to the positioning part 1. This can not only have a fixed connection function, but can also prevent the positioning part 1 from rotating relative to the mounting frame 3.

The mounting frame 3 is configured to mount the positioning part 1 and the electric push rod part 20, which not only has a fixation function, but can also protect the positioning part 1 and the electric push rod part 20. As an example, the mounting frame 3 may comprise a first mounting portion 31 and a second mounting portion 32. The second mounting portion 32 is fixed on the battery swap apparatus. It should be noted that the battery swap apparatus is a battery carrying apparatus, which can remove a used battery pack from an electric vehicle, convey the used battery pack to a battery pack storage apparatus, obtain a fresh battery pack from the battery pack storage apparatus, convey the fresh battery pack to a battery swap position, and mount the fresh battery pack to the electric vehicle, completing the battery swap operation. The first mounting portion 31 is fixed on the second mounting portion 32, the positioning part 1 is mounted in the first mounting portion 31, and the electric push rod part 20 is mounted in the second mounting portion 32.

In the example as shown in Figs. 5 to 7, the first mounting portion 31 comprises a first bottom plate 311, a second bottom plate 312, a first side plate 313, and a guide sleeve 314, wherein the first bottom plate 311 and the second bottom plate 312 are arranged face to face, and a first gap 315 is provided between the first bottom plate 311 and the second bottom plate 312. The first side plate 313 is perpendicularly arranged in the first gap 315. The first side plate 313 is perpendicular to the first bottom plate 311 and the second bottom plate 312, and two ends of the first side plate 313 are respectively connected to the first bottom plate 311 and the second bottom plate 312. It can be understood that the number of first side plates 313 is not limited to one. Not less than one first side plate 313 may be perpendicularly arranged in the first gap 315 according to specific mounting requirements and space usage requirements.

The first bottom plate 311 is provided with a first through hole 316, and the second bottom plate 312 is provided with a second through hole 317 corresponding to the first through hole 316. One end of the guide sleeve 314 is snap-fitted in the first through hole 316, and the other end thereof extends into the second through hole 317 and is fixedly connected to the first bottom plate 311 and the second bottom plate 312. The guide sleeve 314 can not only guide the positioning part 1, but can also protect the positioning part 1 to prevent the positioning part 1 from being damaged. In addition, the guide sleeve 314 can further increase the stability of the mounting frame 3.

As an example, the guide sleeve 314 may comprise a guide body 41, a flange structure 42, and a second guide hole 43, wherein the flange structure 42 is provided at one end of the guide body 41, the guide body 41 passes through the first through hole 316, and the flange structure 42 is snap-fitted to the first bottom plate 311. It should be noted that the first through hole 316 on the first bottom plate 311 may be provided as a stepped hole that matches the flange structure 42, such that the top of the guide sleeve 314 and an upper surface of the first bottom plate 311 are located on the same plane after snap-fitting. The axial direction of the second guide hole 43 penetrates the guide body 41 and the flange structure 42. It can be understood that the axes of the guide body 41 and the flange structure 42 are on the same straight line. The positioning part 1 is located in the second guide hole 43, the positioning part 1 is connected to an inner wall of the second guide hole 43 in a sliding fit manner, and the positioning part 1 can move up and down along the axial direction of the second guide hole 43. However, it can be understood that when the positioning part 1 ascends under the pushing of the telescopic rod 23, the telescopic rod 23 may also enter the second guide hole 43. In this case, the telescopic rod 23 can also move up and down along the second guide hole 43.

As an example, the second mounting portion 32 may comprise a second side plate 321, a third side plate 322, and a third bottom plate 323, wherein the second side plate 321 and the third side plate 322 are arranged face to face, and a second gap 324 is provided between the second side plate 321 and the third side plate 322; and the third bottom plate 323 is perpendicularly arranged in the second gap 324, the third bottom plate 323 is perpendicular to the second side plate 321 and the third side plate 322, and two ends of the third bottom plate 323 are respectively connected to the second side plate 321 and the third side plate 322. It should be noted that one or more groups of second side plates 321 and third side plates 322 may be provided, which can be specifically set according to factors such as the size and the stability of the mounting frame 3.

The bottom of the electric push rod part 20 is provided with a mounting structure 231, the mounting structure 231 is provided on the third bottom plate 323, the mounting structure 231 is provided with a second insertion hole 232, the third side plate 322 is provided with a third insertion hole 33 corresponding to the second insertion hole 232, and the second insertion hole 232 and the third insertion hole 33 are connected via a cotter pin 34, such that the electric push rod part 20 and the second mounting portion 32 are fixedly connected. The cotter pin 34 is used to fix the electric push rod part 20 to the mounting frame 3, which has a simple structure and low costs, and facilitates the mounting and removal of the electric push rod part 20.

The third bottom plate 323 and the second bottom plate 312 are arranged face to face, a third gap 325 is provided between the third bottom plate 323 and the second bottom plate 312, the second side plate 321 and the third side plate 322 are provided in the third gap 325, and the second bottom plate 312 is perpendicular to the second side plate 321 and the third side plate 322, and is fixedly connected to the second side plate 321 and the third side plate 322. The mounting frame 3 is provided with a plurality of mounting holes 35, and various components of the mounting frame 3 can be fixedly connected by mounting bolts at the corresponding mounting holes 35. It can be understood that the above examples are merely some embodiments of the mounting frame 3, but are not limited thereto.

As an example, the positioning part 1 comprises a positioning pin. One end of the positioning pin is connected to the electric push rod part 20, and the other end thereof is of a cone structure, which can extend into a positioning hole of a vehicle body for positioning. It can be understood that one end of the positioning pin being of a cone structure is only an embodiment, but it is not limited thereto. At the position where the positioning pin is connected to the positioning hole of the vehicle body, the specific structure of the end for positioning can be specifically set according to factors such as the shape of the positioning hole of the vehicle body.

In Embodiment 2, the positioning device, which is composed of an electric push rod and the positioning pin mounted in parallel, has a simple structural composition and low costs. In the positioning process, the positioning device has a large positioning thrust, a high force transferring efficiency, and a high positioning efficiency. The positioning part 1 and the telescopic rod 23 of the electric push rod part 20 are connected via bolts, which can not only have a fixed connection function, but can also prevent the positioning part 1 from rotating relative to the mounting frame 3. In addition, the cotter pin 34 is used to fix the electric push rod part 20 to the mounting frame 3, which can further facilitate the mounting and removal. In the battery swap apparatus, each positioning device may be independently disposed and separately controlled, which is convenient for mounting and maintenance. The positioning device occupies only the very small space in the X and Y directions, and occupies only the space in the Z-axis direction and does not occupy the spaces in the X-axis and Y-axis directions in the positioning process because no action is performed in the X-axis and Y-axis directions, so that the overall occupation space is small, and the space occupied by the battery swap apparatus is reduced, thereby increasing the diversity of the layout of a battery swap station.

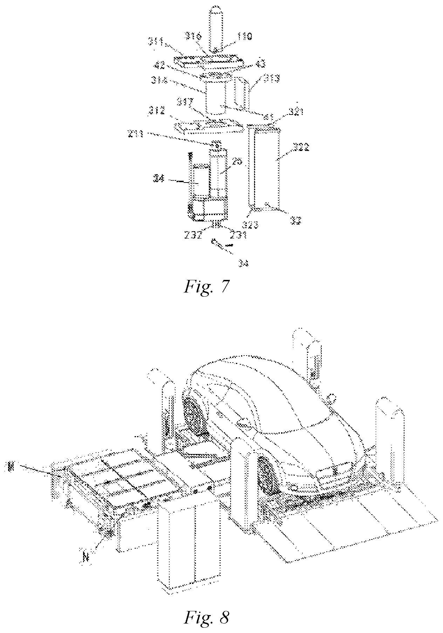

An embodiment of the invention further provides a battery swap apparatus M. The battery swap apparatus M is a constituent part of a battery swap station and configured to transport and swap a battery pack. As an example, the battery swap apparatus M may be a battery swap trolley. As shown in Fig. 8, the battery swap apparatus M may comprise more than two positioning devices N, and each positioning device may be independently disposed and separately controlled, which is convenient for mounting and maintenance. In the example shown in Fig. 8, the upper surface of the battery swap apparatus M is of a rectangular structure, and one of the positioning devices N may be provided at either end of a diagonal line of a battery pack to achieve positioning.

It should be noted that the positioning device according to the invention is not limited to being used in the battery swapping process, and may also be applied to other machine manufacturing and product mounting processes for positioning.

The foregoing descriptions are merely preferred embodiments of the invention, and are not intended to limit the invention in any form. Although the invention has been disclosed as above by means of the preferred embodiments, these embodiments are not for the purpose of limiting the invention. Those skilled in the art can make alterations or modifications to the technical contents disclosed above without departing from the technical solutions of the invention so as to arrive at equivalent embodiments with equivalent changes. However, any simple amendments, equivalent changes and modifications made to the above embodiments according to the technical essence of the invention without departing from the technical solutions of the invention are still within the scope of the technical solutions of the invention.

## Claims

1. A positioning device, **characterized by**
comprising a positioning part and a power part connected thereto, wherein the power part drives the positioning part to move upwards or downwards.

2. The positioning device according to claim 1, **characterized in that**
the positioning part comprises a first gear, a second gear, and a positioning pin, wherein
the first gear is connected to the power part, and the power part drives the first gear to rotate;
the second gear meshes perpendicularly with the first gear, and the first gear drives the second gear to rotate; and
the second gear is provided with an axial through hole, the positioning pin is provided in the axial through hole, and the positioning pin is driven to move up and down when the second gear rotates.

3. The positioning device according to claim 2, **characterized in that**
an outer surface of the positioning pin is provided with an external thread, and a wall of the axial through hole is provided with an internal thread cooperating with the external thread.

4. The positioning device according to claim 3, **characterized in that**
one end of the positioning pin is of a cone structure, which is able to extend into a positioning hole of a vehicle body for positioning, and the other end of the positioning pin is provided with a baffle, wherein the baffle and the axial through hole interfere with each other when coming into contact with each other.

5. The positioning device according to claim 3, **characterized in that**
the outer surface of the positioning pin comprises a plurality of alternately arranged threaded portions and planar portions, both the threaded portion and the planar portion extend in a direction parallel to an axis of the positioning pin, and the distance between the planar portion and the axis of the positioning pin is less than the distance between the threaded portion and the axis.

6. The positioning device according to claim 2, **characterized in that**
the positioning pin is provided with a first limiting hole and a second limiting hole, and axes of the first limiting hole and the second limiting hole are parallel, and are both perpendicular to the axis of the positioning pin, wherein
the first limiting hole is configured to limit the lowest position of the positioning pin during descending; and
the second limiting hole is configured to limit the highest position of the positioning pin during ascending.

7. The positioning device according to claim 6, **characterized in that**
the positioning part further comprises a position sensor and a limiting portion, wherein
the position sensor is configured to collect position information of the positioning pin; and
the limiting portion is configured to restrict, when the first limiting hole and the position sensor are at the same height, the positioning pin from further descending, such that the positioning pin descends to the lowest position, or to:
restrict, when the second limiting hole and the position sensor are at the same height, the positioning pin from further ascending, such that the positioning pin ascends to the highest position.

8. The positioning device according to claim 5, **characterized in that**
the positioning part further comprises a gear box, the gear box comprises a box body and a fixed plate, and the fixed plate is mounted on the box body to close the box body; and
the first gear and the second gear are mounted in the gear box, the fixed plate is provided with a first guide hole corresponding to the axial through hole, the first guide hole has a cross-sectional shape matching that of the positioning pin, and the positioning pin is movable up and down through the first guide hole.

9. The positioning device according to claim 8, **characterized in that**
one or more stacked bearings are further provided in the gear box, and the second gear is mounted on the bearing.

10. The positioning device according to claim 2, **characterized in that**
the power part comprises a first electric motor and a speed reducer connected sequentially; and
the speed reducer is connected to the first gear to drive the first gear to rotate.

11. The positioning device according to any one of claims 2 to 10, **characterized in that**
the diameter of the first gear is less than that of the second gear.

12. The positioning device according to claim 1, **characterized by**
further comprising a mounting frame, wherein the positioning part is mounted on the power part, the positioning part and the power part are both mounted in the mounting frame, and the power part is capable of driving the positioning part to ascend or descend relative to the mounting frame; and wherein the power part is an electric push rod part.

13. The positioning device according to claim 12, **characterized in that**
the electric push rod part comprises a second electric motor, a push rod body, and a telescopic rod provided in the push rod body;
the second electric motor is connected to the telescopic rod, and controls the telescopic rod to ascend or descend relative to the push rod body; and
the telescopic rod is fixedly connected to the positioning part, and drives the positioning part to move up and down between a first position and a second position relative to the mounting frame.

14. The positioning device according to claim 13, **characterized in that**
a first limiting portion and a second limiting portion are provided on the telescopic rod, and a limiting mechanism is provided on the push rod body;
when the telescopic rod ascends to the highest position, the first limiting portion and the limiting mechanism interfere with each other, and the positioning part correspondingly ascends to the first position; and
when the telescopic rod descends to the lowest position, the second limiting portion and the limiting mechanism interfere with each other, and the positioning part correspondingly descends to the second position.

15. The positioning device according to claim 13, **characterized in that**
one or more first insertion holes are provided in the telescopic rod, a first bolt corresponding to each of the first insertion holes is provided at the connection between the positioning part and the telescopic rod, and the first bolt is mounted in the corresponding first insertion hole, and fixedly connects the telescopic rod to the positioning part.

16. The positioning device according to claim 12, **characterized in that**
the mounting frame comprises a first mounting portion and a second mounting portion, the second mounting portion is fixed on a battery swap apparatus, the first mounting portion is fixed on the second mounting portion, the positioning part is mounted in the first mounting portion, and the electric push rod part is mounted in the second mounting portion.

17. The positioning device according to claim 16, **characterized in that**
the first mounting portion comprises a first bottom plate, a second bottom plate, a first side plate, and a guide sleeve, wherein
the first bottom plate and the second bottom plate are arranged face to face, and a first gap is provided between the first bottom plate and the second bottom plate;
the first side plate is perpendicularly arranged in the first gap, is perpendicular to the first bottom plate and the second bottom plate, and has two ends respectively connected to the first bottom plate and the second bottom plate; and
the first bottom plate is provided with a first through hole, the second bottom plate is provided with a second through hole corresponding to the first through hole, and one end of the guide sleeve is snap-fitted in the first through hole, and the other end thereof extends into the second through hole and is fixedly connected to the first bottom plate and the second bottom plate.

18. The positioning device according to claim 17, **characterized in that**
the guide sleeve comprises a guide body, a flange structure, and a second guide hole, wherein
the flange structure is provided at one end of the guide body, the guide body passes through the first through hole, and the flange structure is snap-fitted to the first bottom plate;
an axial direction of the second guide hole penetrates the guide body and the flange structure; and
the positioning part is located in the second guide hole, the positioning part is connected to an inner wall of the second guide hole in a sliding fit manner, and the positioning part is movable up and down along the axial direction of the second guide hole.

19. The positioning device according to claim 17, **characterized in that**
the second mounting portion comprises a second side plate, a third side plate, and a third bottom plate, wherein
the second side plate and the third side plate are arranged face to face, and a second gap is provided between the second side plate and the third side plate; and
the third bottom plate is perpendicularly arranged in the second gap, is perpendicular to the second side plate and the third side plate, and has two ends respectively connected to the second side plate and the third side plate.

20. The positioning device according to claim 19, **characterized in that**
the bottom of the electric push rod part is provided with a mounting structure, the mounting structure is provided on the third bottom plate, the mounting structure is provided with a second insertion hole, the third side plate is provided with a third insertion hole corresponding to the second insertion hole, and the second insertion hole and the third insertion hole are connected via a cotter pin, such that the electric push rod part and the second mounting portion are fixedly connected.

21. The positioning device according to claim 19, **characterized in that**
the third bottom plate and the second bottom plate are arranged face to face, a third gap is provided between the third bottom plate and the second bottom plate, the second side plate and the third side plate are provided in the third gap, and the second bottom plate is perpendicular to the second side plate and the third side plate, and is fixedly connected to the second side plate and the third side plate.

22. The positioning device according to any one of claims 12 to 21, **characterized in that**
the positioning part comprises the positioning pin, one end of the positioning pin is connected to the electric push rod part, and the other end thereof is of a cone structure, which is capable of extending into a positioning hole of a vehicle body for positioning.

23. A battery swap apparatus, **characterized by** comprising not less than two such positioning devices according to any one of claims 1 to 22.
